Europäisches Patentamt

(19) European Patent Office

Office européen des brevets

(11) Publication number: **0 132 462**
**A1**

(12) **EUROPEAN PATENT APPLICATION**

(21) Application number: **83201087.0**

(22) Date of filing: **21.07.83**

(51) Int. Cl.⁴: **B 60 T 17/16**
**B 60 T 11/10, B 60 T 17/22**
**B 60 K 41/00, G 01 P 3/484**

(43) Date of publication of application:
**13.02.85  Bulletin  85/7**

(84) Designated Contracting States:
**AT BE CH DE FR IT LI LU NL SE**

(71) Applicant: **Jow, Long-Shin**
**254 Cheng Kung Road Sec. 2 Nei Hu**
**Taipei, Taiwan, Republic of China(TW)**

(71) Applicant: **Jow, Long-Jiau**
**254 Cheng Kung Road Sec. 2 Nei Hu**
**Taipei, Taiwan, Republic of China(TW)**

(72) Inventor: **Jow, Long-Shin**
**254 Cheng Kung Road Sec. 2 Nei Hu**
**Taipei, Taiwan, Republic of China(TW)**

(72) Inventor: **Jow, Long-Jiau**
**254 Cheng Kung Road Sec. 2 Nei Hu**
**Taipei, Taiwan, Republic of China(TW)**

(74) Representative: **van der Beek, George Frans et al,**
**Nederlandsch Octrooibureau Johan de Wittlaan 15 P.O.**
**Box 29720**
**NL-2502 LS 's-Gravenhage(NL)**

(54) **Automobile brake device.**

(57) An automobile brake device comprising a control valve (10) for controlling the flow of a working medium between a master braking unit (1) and a wheel braking unit (2), the control valve having a passage (15) for the working medium to flow through and a plunger (11) for selectively opening and closing the passage, the plunger being provided with a toggle lever (20) and a spring to resiliently urge the plunger into an open or a close position, the toggle lever being operable by hand to open and close the passage for the working medium, so as to facilitate the braking and the releasing of the brakes of an automobile while driving on a slope.

*FIG.1.*

EP 0 132 462 A1

An automobile brake device.

Automobiles are provided with a hand brake which is normally used to prevent the automobile from slipping when starting to move uphill from a stop on a slope. When the automobile is equipped with a friction clutch the driver has to coordinate the release of the hand brake in combination with the release of the clutch pedal and the depression of the accelerator pedal, all of which requires a certain degree of skill.

In view of the aforesaid difficulty with conventional hand brakes, this invention offers a novel, easily operable brake operating device to keep the automobile from slipping when starting to move uphill from a stop on a slope.

The automobile braking device of the present invention comprises:

a master braking unit operable by foot and adapted to provide a working medium for braking an automobile having wheel brakes, a clutch a transmission and an accelerator;

a wheel braking unit operable by said working medium to actuate said wheel brakes;

a control valve having a passage through which said working medium flows between said master braking unit and said wheel braking unit, and a plunger adapted to selectively open and close said passage; and

a toggle lever operable by hand to move from a first position to a second position, said toggle lever being provided with a resilient member and operatively connected to said plunger so that when said toggle lever is in the first position said toggle lever is urged by said resilient member to urge said plunger to be in a closed position to cl-ose said passage and when said toggle lever is in the second position said toggle lever is urged by said resilient member to urge said plunger to be in an open position to open said passage, said toggle lever being arranged a third position where said plunger is in said open position and remains being urged by said toggle lever and said spring toward said closed position.

The invention will now be further explained in more detail with reference to the drawings.

Fig. 1 is a schematic diagram showing the arrangement of a first embodiment of the brake operating device of this invention, wherein the control valve is open.

Fig. 2 is a schematic, enlarged cross-sectional view of the control valve employed in the device of this invention, wherein the control valve is closed.

Fig. 3 is a schematic, enlarged cross-sectional view of the control valve employed in the device of this invention, wherein the control valve is open.

Fig. 4 is a schematic diagram showing the arrangement of a second embodiment of the device of this invention.

Fig. 5 is a schematic diagram showing the arrangement of a third embodiment of the device of this invention.

Figure 6 is a schematic diagram showing the arrangement of a fourth embodiment of the device of this invention.

Fig. 7 is an electric circuit diagram of the engine speed detector employed in the fourth embodiment as shown in Fig. 6.

Fig. 8 is an electric circuit diagram of the driving speed detector employed in the fourth embodiment as shown in Fig. 6.

Fig. 9 is a schematic diagram showing the arrangement of a fifth embodiment of the device of this invention.

Fig. 10 is a schematic, cross-sectional view of a modified control valve for use with compressed air.

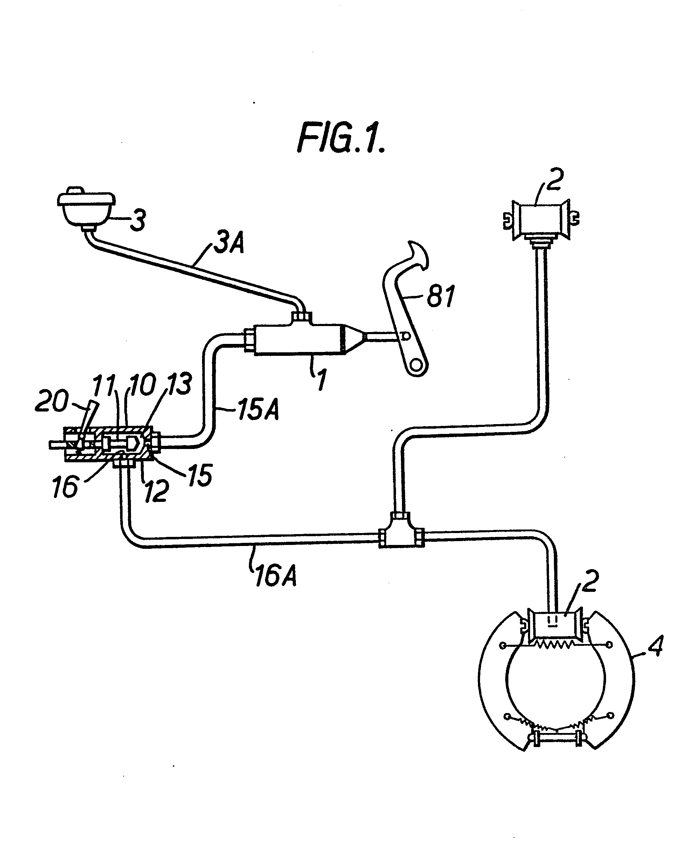

As shown in Fig. 1, the first embodiment of the brake device of this invention comprises a control valve 10 and a toggle lever 20, control valve 10 having a plunger 11, a casing 12, a valve chamber 13, a valve passage or an inlet port 15 and an outlet port 16; the inlet port 15 being connected to the master brake cylinder 1 of the automobile by the brake tube 15A and outlet port 16 being connected to wheel cylinders 2 by the brake tube 16A, the wheel cylinders 2 being adapted to actuate wheel brakes 4. The master brake cylinder 1 is provided with a brake pedal 81 operable by foot and a brake fluid reservoir 3 from which brake fluid is supplied to the master brake cylinder 1 through the tube 3A.

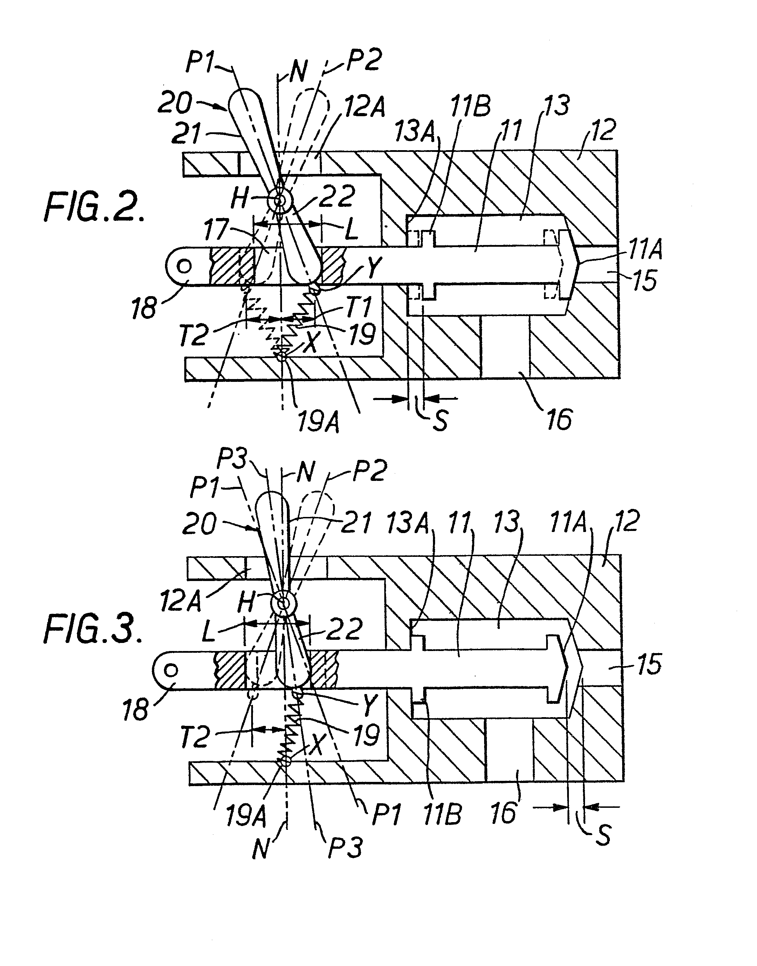

As shown in Fig. 2, the plunger 11 is provided with a conical shaped head 11A and a flange 11B and is slidable inserted into the valve chamber 13, the head 11A being adapted to selectively open or close the inlet port 15 when the plunger 11 is moved away from or towards the inlet port 15. The plunger 11 is further provided with a tail end 18 extending out from the valve chamber 13 and having a slot 17. The toggle lever 20 comprises a handle 21 and a tongue 22 and is pivotally mounted to the casing 12 of the control valve 10 by a hinge H, tongue 22 being inserted into the slot 17 and urged by a compression spring 19 from below, with the handle 21 being extending outwardly through an opening 12A so as to be operable by hand. One end of the spring 19 is pivotally sypported by the casing 12 with a ball 19A at X, and the other end thereof is coupled to an end Y of the tongue 22, so that the toggle lever 20 can resiliently pivot with respect to the hinge H from the position P1 to the position P2. In the drawing, N indicates a neutral position which is defined by an imaginary line N drawn to pass through the hinge H and supporting the point X of the spring 19. The tongue 22 is inserted into the slot 17 having a length L, in such a manner that when the toggle lever 20 is pivoted to the position P1, the plunger 11 is urged by the spring 19 through the tongue 22 to keep the head 11A engaged with the inlet port 15 so as to close the inlet port 15 as shown in solid lines in Fig. 2, and when the toggle lever 20 is pivoted to the position P2, the plunger 11 is urged by the spring 19 through the tongue 22 to keep the head 11A disengaged from the inlet port 15 so as to open the inlet port 15 as shown in the dotted lines in Fig. 2. The flange 11B abuts the end wall 13A of the valve chamber 13 opposite to the inlet port 15 so as to stop the plunger 11 at the open position when the toggle lever 20 is pivoted to the position P2.

Length L of the slot 17 is determined so that when the toggle lever 20 is pivoted to the position P1, the end point Y of the tongue 22 moves to one side of the neutral line N a distance T1, and when the toggle lever 20 is pivoted to the position P2, the end point Y of the tongue 22 moves to the opposite side of the neutral line N a distance T2 from the neutral line N but the plunger moves a distance S from its closed position, and S is so selected to be smaller than T1.

The above described arrangement will be more fully understood by referring to Fig. 3, wherein the plunger 11 is moved from right to left, or from the closed position to the open position by a means other than the toggle lever 20, such means perhaps being the brake fluid pressure from the inlet port 15 to act on the head 11A of the plunger 11. Thus the end point Y is accordingly moved a distance equivalent to the displacement S of the plunger 11 to the position P3, where the end point Y remains in the right hand side of the neutral line N since S is smaller than T1, and consequently the plunger 11 is still being urged by the spring 19 through the tongue 22 toward the inlet port 15, or

6

toward its closed position. With the flange 11B abutting end wall 13A, the length L of the slot 17 allows the toggle lever 20 to be selectively pivoted to position P2 (as shown in dotted lines) where the plunger 11 will be urged by the spring 19 through the tongue 22 in the opposite direction so as to keep the head 11A away from the inlet port 15, or at its open position.

The operation and function of the first embodiment of this invention will now be described.

In normal driving, the toggle lever 20 is moved by hand to the position P2 and kept in the position P2 by the spring 19, and the inlet port 15 is kept open. Brake fluid is thus free to flow to and from the master brake cylinder 1 and the wheel cylinders 2 through the control valve 10 and the wheel brakes operate as the conventional automobile brakes do.

As soon as the automobile comes to an uphill slope and the driver wants to stop, the toggle lever 20 is moved from the position P2 to P1 so as to close the inlet port 15. This can be done either before or after depressing the brake pedal 81 (Fig. 1). If the toggle lever 20 is moved to P1 to close the inlet port 15 before depressing the brake pedal 81, the control valve 10 acts as a check valve allowing pressurized brake fluid to flow from the master brake cylinder 1 to the wheel cylinders 2 since the plunger 11 will be pushed by the pressurized brake fluid from the inlet port 15 to move away from the inlet port 15, but as soon as the brake pedal 81 is released to relieve the pressure of the brake fluid on the inlet port 15, the plunger 11 will be pushed by the spring 19 through the tonge 22 of the toggle lever 20 towards the inlet port 15 to close the inlet port 15, thus blocking the return of brake fluid from the wheel cylinders 2 to the master brake cylinder 1, and therefore the brake fluid in wheel cylinders 2 is kept pressurized to keep the wheel brakes "on" after the brake pedal 81 is released. If the toggle lever 20 is moved to the position P1 after the brake pedal 81 is depressed, the plunger 11 will be pushed by the spring 19 towards the inlet port 15 to close the inlet port 15 as soon as the brake pedal 81 is released, thus blocking the return of the brake fluid from the wheel cylinders 2 to the master brake cylinder 1, to keep brake fluid in the wheel cylinders 2 pressurized to keep the wheel brakes "on".

When the driver wants to move the automobile after making the stop as above, the toggle lever 20 is moved from the position P1 to the position P2 as soon as the transmission is shifted into low gear and the clutch is engaged. Then the inlet port 15 is open to allow the return of brake fluid from the wheel cylinders 2 to the master brake cylinder 1 so as to release the wheel brakes.

With this arrangement, the braking force is produced by brake fluid by depressing the brake pedal 81; very little effort is required to operate the toggle lever 20 in comparison with the conventional hand brakes which require a certain hand force and skill to operate.

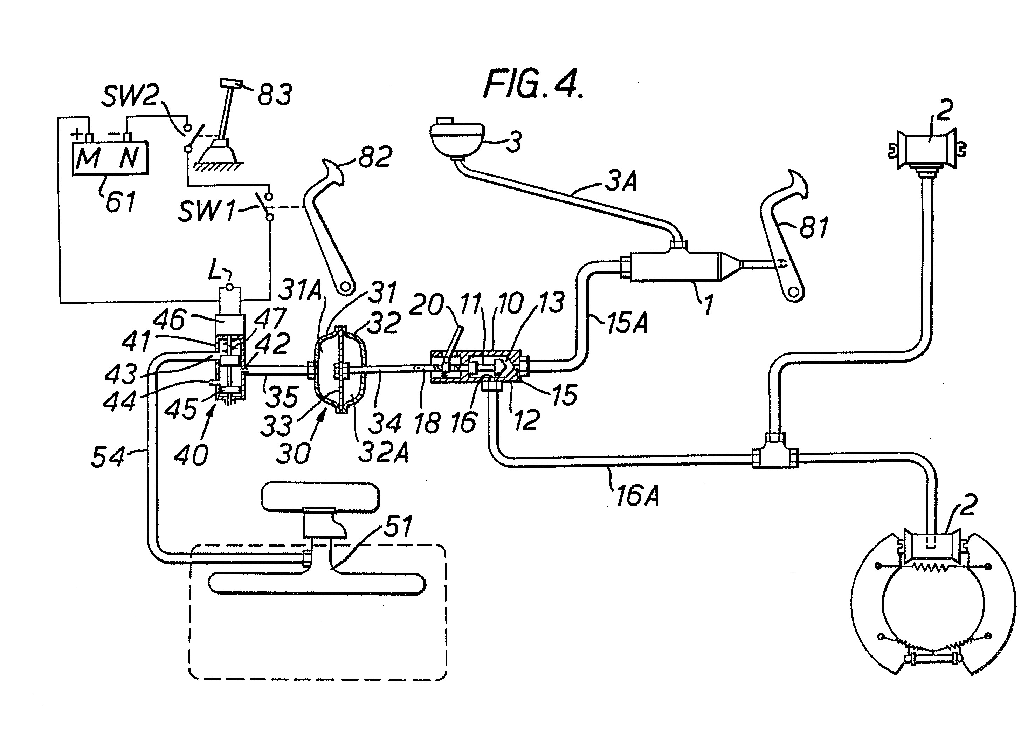

If Fig. 4 there is shown a second embodiment of the device of this invention. In this embodiment, the device comprises a control valve 10 and toggle lever 20 as in the first embodiment, and an actuator 30 having a connecting rod 34 connected to a tail end 18 of the plunger 11 of the control valve 10, and a solenoid valve 40. The actuator 30 comprises the first half casing 31 and second half casing 32; a flexible diaphragm 33 disposed in between the first half casing 31 and second half casing 32 to form an acting chamber 31A on one side and a free chamber 32A on the opposite side; and a connecting rod 34 having one end fixedly connected to the diaphragm 33 and the other end freely extending through the free chamber 32A and second half casing 32 to connect to the tail end 18 of the plunger 11. The first half casing 31 is provided with a tube 35 which communicates acting the chamber 31A with the first port 42 of the solenoid valve 40.

Solenoid valve 40 comprises a solenoid 46; a three way valve having a casing 41, first port 42, second port 43, third port 44, piston valve 45 and spring 47. The piston valve 45 is normally urged by the spring 47 into a first position where the first port 42 and the third port 44 communicate with each other, and is adapted to be pulled to a second position where the solenoid 46 is energized, where the first port 42 and the second port 43 communicate with each other. The second port 43 is connected to the intake manifold 51 of the automobile's engine by the tube 54 so that when the solenoid 46 is energized to pull the piston valve 45 to the second position, the intake manifold 51 is caused to communicate with the acting chamber 31A through the tube 54, the second port 43, the first port 42, and the tube 35, thus creating a vacuum in the acting chamber 31A. The third port 44 is open to the atmosphere so that when the piston valve 45 is at the first position, or the solenoid 46 is de-energized, the acting chamber 31A communicates with the atmosphere and the second port 43 is closed.

The solenoid 46 is electrically connected to an electrical power source 61 through a first switch SW1 operable in association with clutch a pedal 82, and a second switch SW2 operable in association with a transmission shift lever 83; the first switch SW1 being connected in series with the second switch SW2. The first switch SW1 is caused to open when the clutch pedal 82 is fully depressed or the clutch is completely disengaged, and is caused to close when the clutch pedal 82 is partially released or the clutch is being engaged. The second switch SW2 is caused to open when transmission a shift lever 83 is in the neutral position, and is caused to close when the transmission shift

10

lever 83 is in any of the gear positions.

The second embodiment enables an automatic opening of the inlet port 15 of the control valve 10 without the need of the moving toggle lever 20 from the position P1 to P2 when moving the automobile from a stop on an uphill slope. This automatic opening of the inlet port 15 is performed by first, depressing the clutch pedal 82; second, shifting the transmission shift lever to a low gear position (wherein the second switch SW2 is closed); and third, slowly releasing the clutch pedal 82 (thus the first switch SW1 is closed) and depressing the accelerator pedal, not shown. The above precess causes the solenoid 46 to be energized, and a vacuum is created in acting chamber 31A of the actuator 30 to act on the diaphragm 33 to pull the connecting rod 24, and consequently the plunger 11 away from the inlet port 15 to open the inlet port 15. In other words, as long as the automobile is being driven, the clutch is engaged, and the transmission in driving position, the acting chamber 31A is kept communicating with the intake manifold 51 and vacuum is maintained therein, and as a result the inlet port 15 is kept open to enable a normal driving of the automobile. If the driver wants to make a second stop on the same uphill slope, the automobile can be stopped and kept stopped on the slope without the need of moving the toggle lever 20 because either the first switch SW1 or second switch SW2 will be caused to open when the automobile is brought to a stop, and the solenoid 46 is thus de-energized to break the vacuum in acting chamber 31A. As a result the plunger 11, being urged by the spring 19 as the toggle lever 20 is at the position P3, is pushed towards the inlet port 15 to close the inlet port 15 and in the meantime the toggle lever moves to the position P1 along with the plunger 11. Therefore the wheels will remain braked after the automobile is brought to a stop for the second time on the same slope. While the toggle lever 20 is in the position P1 and the inlet port 15 is closed, the automobile can be moved after making the second stop without moving the toggle lever 20 by hand to open the inlet port 15 because the inlet port 15 will be opened as soon as the transmission is in a driving gear position and the clutch is being engaged, as described above. As soon as the automobile is brought onto a level road for normal driving, the lever 20 may be moved by hand to the position P2. In the drawing, L is an indicator lamp connected across the solenoid 46 so as to be lit when the solenoid 46 is energized.

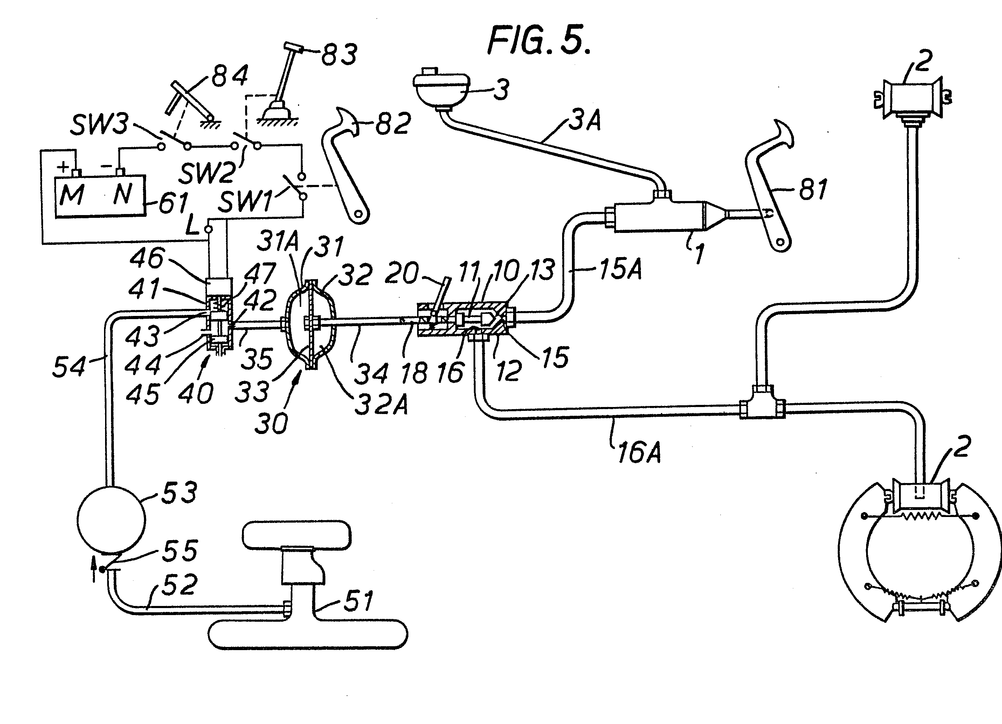

Fig. 5 shows a third embodiment of this invention.

In addition to the control valve 10, the toggle lever 20, the actuator 30, and the solenoid valve 40 arranged as described above, the third embodiment further comprises a third switch SW3 connected in series with the first switch SW1 and the second switch SW2, said third switch SW3 being operable in association with an accelerator pedal 84; and a vacuum tank 53 provided with a check valve 55. A second port 43 of the solenoid valve 40 is connected to the vacuum tank 53 with the tube 54, and the vacuum tank 53 is connected to the intake manifold by the tube 52 through the check valve 55. When the engine is running, vacuum is always formed and maintained in the vacuum tank 53. The check valve 55 is adapted to prevent the drop of the intensity of vacuum in the vacuum tank 55 when the engine speed decreases and vacuum in the intake manifold 51 decreases, so that a generally steady vacuum is maintained in the vacuum tank 53. The third switch SW3 is caused to close when the accelerator pedal 84 is depressed, and is caused to open when the accelerator pedal 84 is released.

With this arrangement, the plunger 11 with the toggle lever 20 at the position P1 (closed position) will be pulled to open the inlet port 15 when the transmission shift lever is in a driving gear position (second switch SW2 is closed), the clutch is being engaged (first switch SW1 is closed) and the engine is being accelerated (third switch SW3 is closed). This embodiment further assures a smooth moving of the automobile from a stop on an uphill slope.

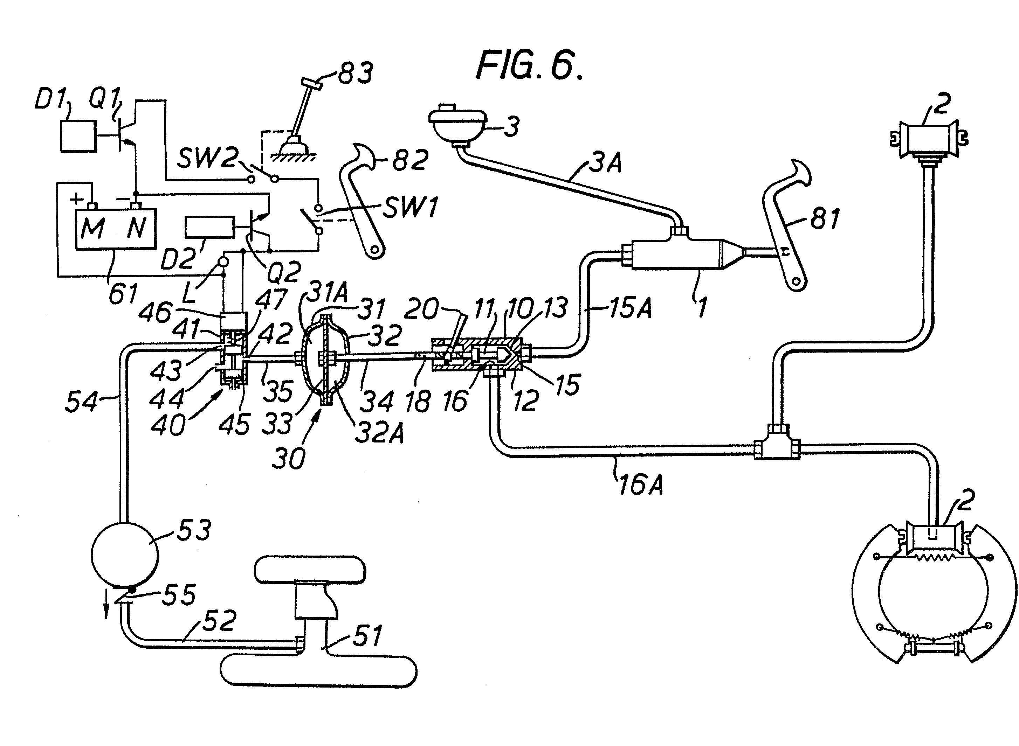

Fig. 6 shows a fourth embodiment of this invention.

The device of this embodiment further comprises a first switching transistor Q1 connected in series with the first and the second switches SW1 and SW2, said first switching transistor Q1 being operable by an engine speed detector D1;

and a second switch SW2, and the first switching transistor Q1, said second switching transistor Q2 being operable by a driving speed detector D2 in addition to the arrangement of the third embodiment, except that third switch SW3 of the third embodiment is eliminated.

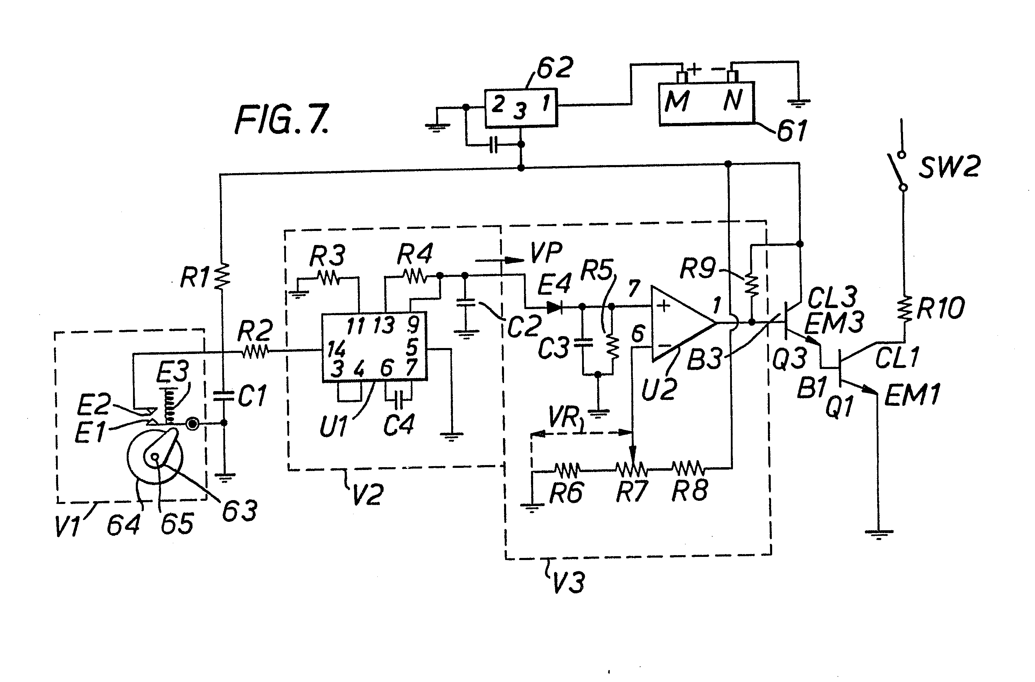

Fig. 7 shows an electrical circuit diagram of the engine speed detector D1, which comprises an input unit V1, a frequency-voltage converter V2, a comparator V3 and an amplifying transistor Q3.

The input unit V1 comprises a cam 63 fixedly mounted onto a shaft to be driven by a wheel 64 which is driven by a fan belt of the automobile engine, not shown, a movable contact point E1, a fixed contact point E2, the movalbe contact point E1 being adapted to make a contact engagement with a fixed contact point E2 when the cam 63 rotates to push the movable contact point E1 towards the fixed contact point E2, and to be pushed by a spring E3 to disengage from the fixed contact point E2, so that the movalbe contact point E1 comes into contact with the fixed contact point E2 once per each rotation of cam 63. The fixed contact point E2 is electrically connected to a terminal 3 of an IC unit 62 which is IC No. 7805 having a terminal 1 connected to the plus end M of an electrical power source 61 which has a negative pole connected to the chassis, not shown, or ground ($\doteq$); and the movable contact point E1 is electrically connected to the ground. The IC unit 62 is adapted to convert the voltage of 12 volts from the electrical power source 61 to 5 volts to be applied to the engine speed detector system. A capacitor C1 is connected across the movable contact point E1 and fixed contact point E2.

Frequency-Voltage converter V2 comprises a conversion unit U1, which is an integrated circuit No. CD4046 having terminals 3, 4, 5, 6, 7, 9, 11, 13 and 14 wherein terminal 14 is connected to the fixed contact point E2 through the resistor R2, the terminal 3 is connected to the terminal 4, the terminal 6 is connected to the terminal 7 through the capacitor C4, the terminal 5 is connected to the negative pole N of electrical power source 61, or ground, the terminal 11 is connected to the ground through the resistor R3, the terminal 13 is connected to the terminal 9 through the resistor R4, the terminal 9 is further connected to the ground through the capacitor C2.

Comparator V3 comprises a comparing unit U2 which is an integrated circuit No. LM339 having terminals No. 1, 6 and 7; and a diode E4 having a cathode connected to the terminal 9 of frequency-voltage conversion unit U1, and an anode connected to the terminal 7 of comparing unit U2, said terminal 7 of comparing unit U2 being also connected to the ground through the resistor R5 having the capacitor C3 connected in parallel with the resistor R5. The terminal 6 of comparing unit U2 is connected to the variable resistor R7 having one end connected to the resistor R6 for connection with the ground and the other end thereof connected
to the resistor R8 for connection with the terminal 3 of IC
unit 62. The terminal 1 of the comparing unit U2 is connected to the base B3 of the amplifying transistor Q3, said
amplifying transistor Q3 having a collector CL3 connected
to the positive pole M of the electrical power source 61
through IC unit 62, and also to the terminal 1 of the comparing unit U2 through the resistor R9. The amplifying
transistor Q3 is further provided with an emitter EM3 which
is connected to the first switching transistor Q1 to be
described below.

The first switching transistor Q1 comprises a base B1
connected to an emitter EM3 of the amplifying transistor Q3,
a collector CL1 of the transistor Q1 connected to the second
switch SW2, and an emitter EM1 connected to the ground.

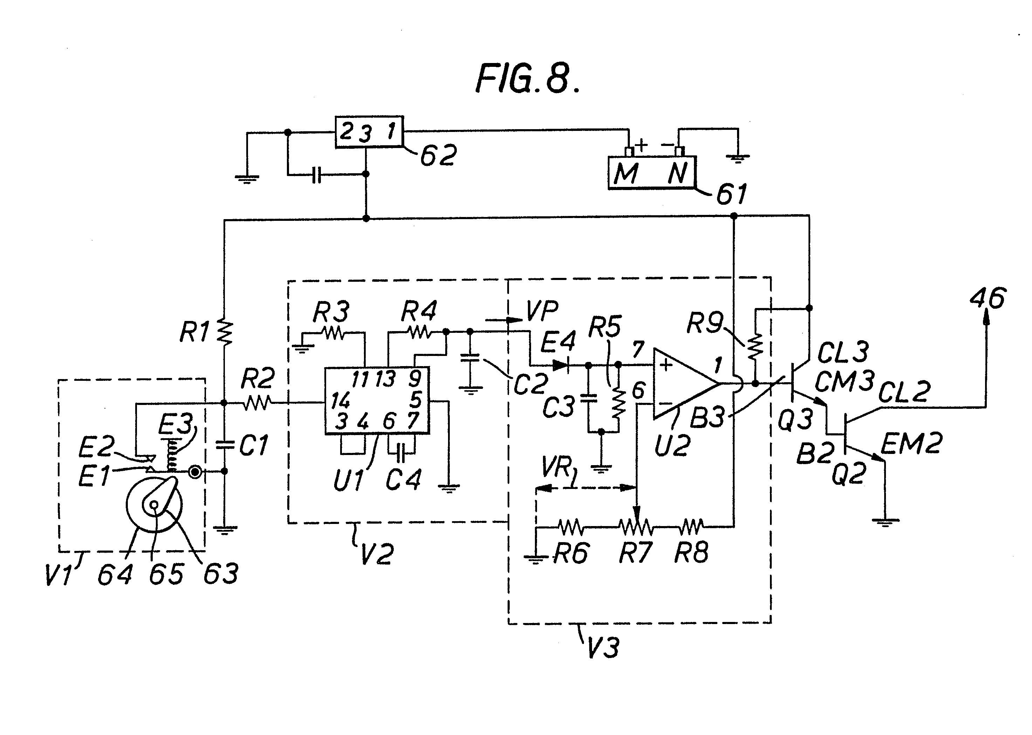

Fig. 8 shows an electrical circuit diagram of driving
speed detector D2, which is identical to the engine speed
detector D1 except that the wheel 64 is driven by the
propeller shaft of the automobile with a belt or is operatively coupled to a speedomoter drive axle of the automobile, and an emitter EM3 of the amplifying transistor Q3
is connected to the base B2 of second switching transistor
Q2 having collector CL2 connected to the connection of
solenoid 46 and the first switch SW1 and the emitter EM2
connected to the ground.

Referring back to Fig. 7, a series of electrical pulses at a certain frequency is produced by input unit V1 when the automobile engine runs and the cam 63 is rotated. The series of electrical pulses is then fed to and converted by the frequency-voltage convertor V2 to a steady output voltage Vp in propotion to the engine speed. The output voltage Vp is then applied to the comparator V3 and compared with a divisional voltage $V_R$, a voltage is produced to be applied to the amplifying transistor Q3, which in turn activates the first switching transistor Q1 to allow the electric current to flow through the collector CL1 and the emitter EM1. On the other hand if the output voltage Vp is lower than the divisional voltage $V_R$, no voltage will be produced at terminal 1 of U2 and thus the first switching transistor Q1 will not be activated, and therefore no electric current will be allowed to flow through collector CL1 and emitter EM1 of transistor Q1.

In other words, when the engine speed is below a certain pre-selected speed, the first switching transistor Q1 is "open" and solenoid 46 of solenoid valve 40 is de-energized; when the engine speed is above the pre-selected speed, the first transistor Q1 is "closed" and solenoid 46 of solenoid valve will be energized if the first switch SW1 and second switch SW2 are closed.

The pre-selected speed can be changed by changing the resistance valve of variable resistor R7 so as to vary the

divisional voltage $V_R$.

Similarly, the driving speed detector D2 and the second switching transistor Q2 as shown in Figs. 6 and 8 cause the solenoid 46 of the solenoid valve 40 to be de-energized when the driving speed is below a certain speed, and to be energized when the driving speed is over the certain speed.

The fourth embodiment enables the inlet port 15 to open when the driving speed of the automobile is over a certain speed, or the clutch is being engaged, the transmission is in a driving gear position and the engine speed is over a certain speed.

Therefore, the arrangement according to the fourth embodiment provides a completely automatic operation for releasing the brake after making a stop with toggle lever 10 in the position P1.

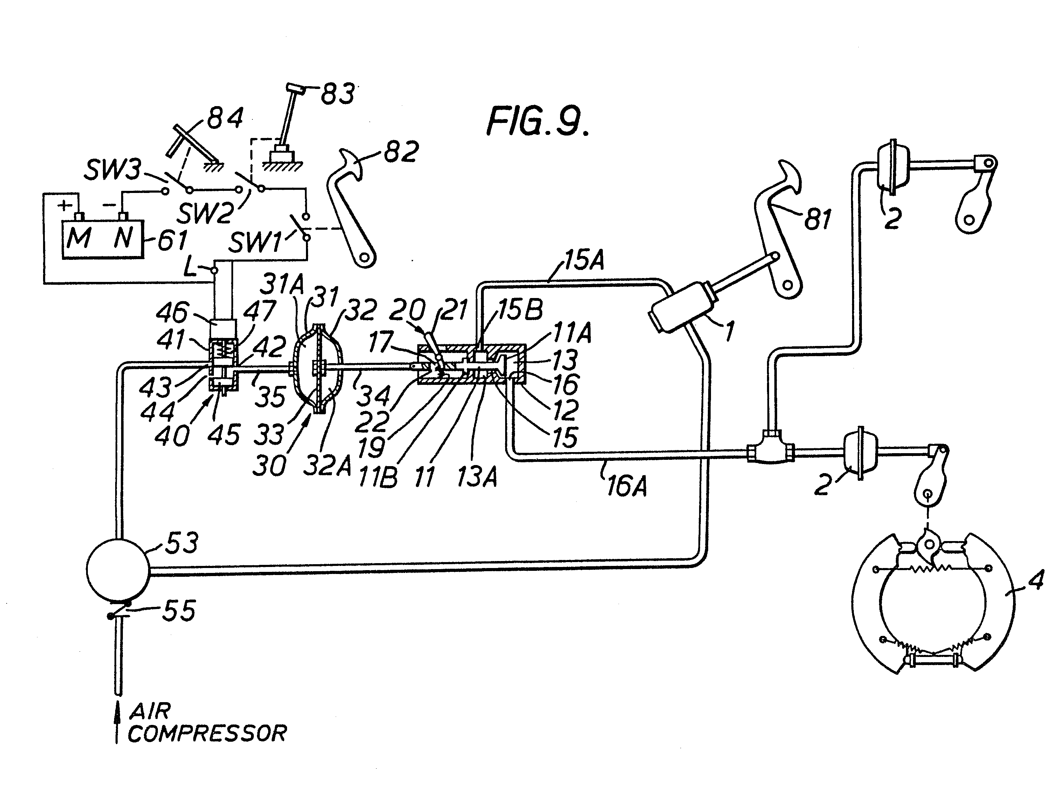

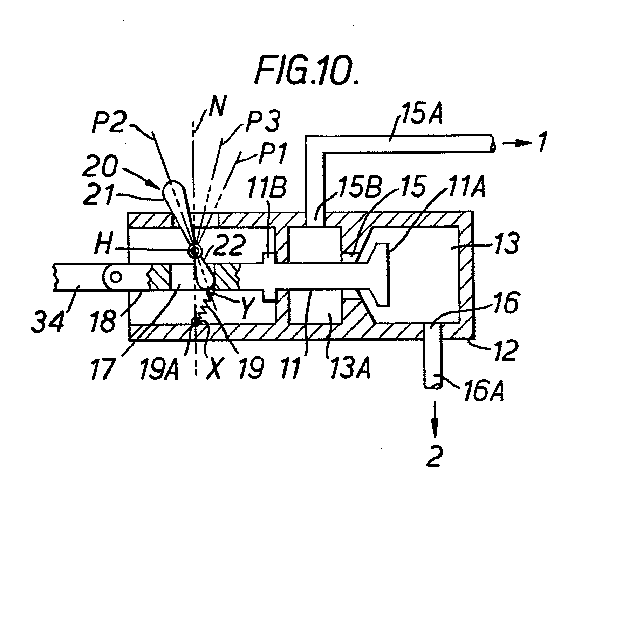

Fig. 9 shows a fifth embodiment of the device of this invention. This embodiment is adapted to the use of compressed air which is available in certain automobiles equipped with air brakes instead of hydraulic brakes. In this embodiment, the control valve 10 is modified as the detail shown in Fig. 10, so that the plunger 11 moves in an opposite direction to open or to close the valve passage 15. The control valve 10 is adapted to control the flow of compressed air between the treadle valve 1 operable by the brake pedal 81 and the wheel brake chamber 2 adapted to actuate wheel brakes 4. The compressed air is supplied to the treadle valve 1 from the compressed air tank 53 in which the compressed air is maintained as in a conventional air brake system. The second port 43 of the solenoid valve 40 is connected to the compressor air tank 53 so that the compressed air is admitted to acting chamber 31A of the actuator 30 when the solenoid 46 is energized. The connecting rod 34 is thus pushed, instead of being pulled, to move plunger 11 to open the inlet port 15.

As shown in Fig. 10, the control valve 10 employed in this embodiment comprises a casing 12, a first valve chamber 13 adapted to communicate with wheel brake chambers 2 by a tube 16A, a second valve chamber 13A adapted to communicate with the treadle valve 1 by a tube 15A, a valve passage 15, communicating the first and second valve chambers 13 and 13A, the plunger 11 slidably disposed in the first and second valve chambers 13 and 13A and having a head 11A formed at the end thereof, said head 11A being adapted to close from the first chamber 13 side passage 15 when the plunger 11 is pulled to retract, and to open the passage 15 when the plunger 11 is pushed to move forward. The plunger 11 is further provided with a flange 11B, the tail end 18, the slot 17, the toggle lever 20 and the spring 19 as described in the first and second embodiments, the tail end 18 being connected to the connecting rod 34 of the actuator 30.

The arrangement of solenoid valve 40, the first switch SW1, the second switch SW2 and the third switch SW3 is the same as those of the third embodiment.

Although it is not shown in the drawing, it is to be understood that the third switch SW3 may be eliminated and the first switching transistor Q1 with the engine speed detector D1 and the second switching transistor Q2 with the driving speed detector D2 may be employed in combination with the arrangement of the fifth embodiment.

Furthermore, it is to be understood that the control valve 10 and the vacuum system employed in the third embodiment can be used in an air brake system wherein the treadle valve replaces the master brake cylinder to act as a master braking unit, and the wheel brake chamber replaced the wheel brake cylinder to act as a wheel braking unit.

While preferred embodiments of the automobile brake device of this invention have been described by way of example, it is to be understood that the construction and arrangement can be otherwise modified without departing from the principles and the scope of this invention as defined in the appended claims.

## CLAIMS

1. An automobile brake device, comprising:

a master braking unit operable by foot and adapted to provide a working medium for braking an automobile having wheel brakes, a clutch a transmission and an accelerator;

a wheel braking unit operable by said working medium to actuate said wheel brakes;

a control valve having a passage through which said working medium flows between said master braking unit and said wheel braking unit, and a plunger adapted to selectively open and close said passage; and

a toggle lever operable by hand to move from a first position to a second position, said toggle lever being provided with a resilient member and operatively connected to said plunger so that when said toggle lever is in the first position said toggle lever is urged by said resilient member to urge said plunger to be in a closed position to close said passage and when said toggle lever is in the second position said toggle lever is urged by said resilient member to urge said plunger to be in an open position to open said passage, said toggle lever being arranged a third position where said plunger is in said open position and remains being urged by said toggle lever and said spring toward said closed position.

2. An automobile brake device as recited in claim 1, wherein said working medium is a brake fluid, said master braking unit is a master brake cylinder and said wheel braking unit is a wheel brake cylinder.

3. An automobile brake device as recited in claim 1, wherein said working medium is a compressed air, said master braking unit is a treadle valve and said wheel braking unit is a wheel brake chamber.

4. An automobile brake device as recited in claims 1, 2 or 3, wherein said control valve further comprises:

an actuator having a connecting rod connected to said plunger and an acting chamber to which a working means may be applied for operating said connecting rod;

a solenoid valve having a solenoid to be selectively energized by an electrical power and a valve means operable by said solenoid, said valve means being so connected to said actuator that said working means is applied to said acting chamber through said valve means to cause said connecting rod to move in one direction when said solenoid is energized, and said working means is released from said acting chamber to allow said connecting rod to move in the opposite direction when said solenoid is de-energized; and

a first switch and a second switch connected in series with the first switch for connecting said solenoid to an electrical power source, said first switch being caused to open when the clutch is disengaged and to close when the clutch is being engaged; said second switch being caused to open when the transmission is in a neutral position and to close when the transmission is in a driving gear position.

5. An automobile brake device as recited in claim 4, wherein said solenoid valve further comprises:

a reservoir tank for storing said working means, said reservoir tank being connected to said solenoid valve so that said working means is applied to said acting chamber of said actuator through said valve means when said solenoid is energized; and

a third switch connected in series with said first switch and said second switch, said third switch being caused to close when the accelerator is being depressed and to open when the accelerator is released.

6. An automobile brake device as recited in claim 4, wherein said solenoid valve further comprises:

a reservoir tank for storing said working means, said reservoir tank being connected to said solenoid valve so that said working means is applied to said acting chamber of said actuator through said valve means when said solenoid is energized;

a first switching means connected in series with said first switch and second switch, said first switching means being electrically operable by an engine speed detector comprising:

an input unit adapted to produce a series of electrical pulses at a frequency in proportion to the speed of the engine;

a frequency-voltage converter adapted to convert said series of electrical pulses into an output voltage;

a comparator for comparing said output voltage with a reference voltage selectively predetermined to represent a certain engine speed, for producing an end voltage to cause said first switching means to become conductive when said output voltage is over said reference voltage; and

a second switching means connected accross the series connection of said first switch, second switch and first switching means, said second switching means being electrically operable by a driving speed detector comprising:

an input unit adapted to produce a series of electrical pulses at a frequency in proporation to the driving speed of the automobile;

a frequency-voltage converter adapted to convert said series of electrical pulses into an output voltage;

a comparator for comparing said output voltage with a reference voltage selectively predetermined to represent a certain driving speed, for producing an end voltage to cause said second switching means to become conductive when said output voltage is over said reference voltage.

7.  An automobile brake device as recited in claim 6, wherein said first switching means and second switching means are respectively a switching transistor, and said reference voltage is provided by a variable resistor connected to said electrical power source.

8.  An automobile brake device as recited in claim 4, 5, 6 or 7, wherein said working means is a vacuum produced in an intake manifold of the automobiles engine and said valve means is connected to the intake manifold by a tube means.

9.  An automobile brake device as recited in claim 4, 5, 6 or 7, wherein said working means is a compressed air.

# FIG.1.

FIG.2.

FIG.3.

FIG.4.

FIG.5.

SW3

SW2

SW1

L

M  N

61

46
41
47
42
43
44
45
40

31A  31
32  20
11  10  13
15A

34  18  16
12  15

35
33
30
32A

54

53
55
52
51

16A

1

2

82
83
84

81

3
3A

2

4/9

0132462

FIG.6.

0132462

FIG.7.

6/9

0132462

FIG.8.

**FIG.9.**

## FIG.10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 322 246   (NOGUCHI)  * Column  2, line 28 - column 4, line 28; figures 1-5 * | 1,2 | B 60 T   17/16  B 60 T   11/10  B 60 T   17/22  B 60 K   41/00  G 01 P    3/484 |
| Y |  | 4 | |
| | --- | | |
| Y | FR-A-2 027 437   (BENDIX)  * Page 5, line 36 - page 6, line 35; figure 1 * | 4 | |
| A |  | 1,2,8 | |
| | --- | | |
| A | US-A-3 893 698   (FONTAINE)  * Column  5, line 15 - column 6, line 30; figure 1 * | 1,2,4, 5 | |
| | --- | | TECHNICAL FIELDS SEARCHED (Int. Cl. 3) |
| A | FR-A-2 031 522   (KIMURA)  * Page  3, line 3 - page 7, line 19; figures 1,2 * | 1,2 | B 60 T   17/16  B 60 T   11/10  B 60 K   41/20  B 60 K   41/24 |
| | --- | | |
| A | US-A-3 468 586   (BALKUS) | 1,2,8 | B 60 K   41/26  G 01 P    3/484  B 60 R   25/08 |
| | --- | | |
| A | EP-A-0 061 543   (OGDEN) | | |
| | --- | | |
| A | EP-A-0 055 611   (FUJI) | | |
| | ---            -/- | | |

| The present search report has been drawn up for all claims | | |
|---|---|---|
| Place of search  THE HAGUE | Date of completion of the search  16-10-1984 | Examiner  HARTEVELD C.D.H. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

European Patent
Office

| | DOCUMENTS CONSIDERED TO BE RELEVANT | | Page 2 | |
|---|---|---|---|---|

| Category | Citation of document with indication where appropriate, of relevant passages | Relevant to claim | CLASSIFICATION OF THE APPLICATION (Int Cl ³) |
|---|---|---|---|
| A | DE-A-2 323 343 (WELTER) | | |
| | ----- | | |

TECHNICAL FIELDS
SEARCHED (Int Cl ³)

The present search report has been drawn up for all claims

| Place of search THE HAGUE | Date of completion of the search 16-10-1984 | Examiner HARTEVELD C.D.H. |
|---|---|---|

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document